# EUROPEAN PATENT APPLICATION

(11) **EP 4 779 994 A1**
(43) Date of publication of application: **22.07.2026**
(21) Application number: 24864413.0
(22) Date of filing: 21.08.2024
(51) Int. Cl.: H04N 21/431, G06F 3/048

(54) **VIDEO PROCESSING METHOD, APPARATUS, AND DEVICE, AND STORAGE MEDIUM**

(30) Priority: 14.09.2023 CN 202311189537
(71) Applicant: Beijing Zitiao Network Technology Co., Ltd., Beijing 100190 (CN)
(72) Inventor: ZHAO, Xi, Beijing 100028 (CN); XU, Hongyan, Beijing 100028 (CN); DING, Yi, Beijing 100028 (CN)
(74) Representative: Isarpatent
(86) International application number: PCT/CN2024/113721
(87) International publication number: WO 2025/055690

(57) **Abstract**

The present disclosure provides a video processing method, apparatus, and device, and a storage medium. The method comprises: in response to a mode switching operation acting on a first playback mode interface of a first video, displaying a second playback mode interface of the first video, an interaction function control determined on the basis of the first video being displayed in a preset function area on the second playback mode interface; and in response to a trigger operation for a first interaction function control, displaying a preset interaction function panel on the second playback mode interface, and displaying on the preset interaction function panel first interaction information corresponding to the first interaction function control. According to the present disclosure switching between different playback mode interfaces of a video is supported, an interaction function control determined on the basis of the video is displayed on a second playback mode interface after mode switching, and a user is supported to trigger, on the second playback mode interface, display of interaction information determined on the basis of the video.

## Description

### CROSS-REFERENCE TO RELATED APPLICATION(S)

The present application claims priority to Chinese Patent Application No. 202311189537.2, filed with the China National Intellectual Property Administration on September 14, 2023 and entitled "VIDEO PROCESSING METHOD, APPARATUS, AND DEVICE, AND STORAGE MEDIUM", which is incorporated herein by reference in its entirety.

### FIELD

The present disclosure relates to the field of data processing, and in particular to a video processing method, apparatus, and device, and a storage medium.

### BACKGROUND

With the continuous development of short video technology, people's interaction requirements related to video playback have become more and more diversified.

Therefore, how to enrich interactive functions related to video playback to meet users' diversified interaction requirements and improve users' video playback experience is a technical problem that needs to be solved currently.

### SUMMARY

To solve the above-mentioned technical problem, embodiments of the present disclosure provide a video processing method.

According to a first aspect, the present disclosure provides a video processing method. The method includes:
displaying, in response to a mode switch operation acting on a first playback mode interface of a first video, a second playback mode interface of the first video, where at least one interactive function control determined based on the first video is displayed in a preset function area on the second playback mode interface; and
in response to a trigger operation on a first interactive function control among the at least one interactive function control, displaying a preset interactive function panel on the second playback mode interface, and displaying first interactive information corresponding to the first interactive function control on the preset interactive function panel, where the first interactive information is determined for an interactive function corresponding to the first interactive function control and based on the first video.

In optional implementations, after displaying, in response to the mode switch operation acting on the first playback mode interface of the first video, the second playback mode interface of the first video, the method further includes:
switching from the first video to a second video in response to a video switch operation on the first video, and displaying a first playback mode interface of the second video.

In optional implementations, displaying, in response to the trigger operation on the first interactive function control among the at least one interactive function control, the preset interactive function panel on the second playback mode interface includes:
playing, in response to the trigger operation on the first interactive function control among the at least one interactive function control, the first video in a preset reduced-size-window mode on the second playback mode interface, and displaying the preset interactive function panel.

In optional implementations, the preset interactive function panel is provided with a second interactive function control determined based on the first video, and after displaying the first interactive information corresponding to the first interactive function control on the preset interactive function panel, the method further includes:
switching, on the preset interactive function panel, from display of the first interactive information corresponding to the first interactive function control to display of second interactive information corresponding to the second interactive function control in response to a trigger operation on the second interactive function control acting on the preset interactive function panel, where the second interactive information is determined based on the first video.

In optional implementations, the second interactive function control is a related-recommended-video control, and the second interactive information corresponding to the second interactive function control includes a related recommended video of the first video.

In optional implementations, the second playback mode interface is provided with a playback control component, and after displaying, in response to the mode switch operation acting on the first playback mode interface of the first video, the second playback mode interface of the first video, the method further includes:
performing, in response to a trigger operation on the playback control component, playback control on the first video being currently played on the second playback mode interface.

In optional implementations, the interactive function control is determined based on a media resource genre to which the first video belongs.

According to a second aspect, the present disclosure provides a video processing apparatus. The apparatus includes:
a first display module configured to display, in response to a mode switch operation acting on a first playback mode interface of a first video, a second playback mode interface of the first video, where at least one interactive function control determined based on the first video is displayed in a preset function area on the second playback mode interface; and
a second display module configured to in response to a trigger operation on a first interactive function control among the at least one interactive function control, display a preset interactive function panel on the second playback mode interface, and display first interactive information corresponding to the first interactive function control for the preset interactive function panel, where the first interactive information is determined for an interactive function corresponding to the first interactive function control and based on the first video.

According to a third aspect, the present disclosure provides a computer-readable storage medium. The computer-readable storage medium stores instructions therein, and the instructions, when run on a terminal device, cause the terminal device to implement the method described above.

According to a fourth aspect, the present disclosure provides a video processing device. The device includes: a memory, a processor, and a computer program that is stored on the memory and executable on the processor, where the processor, when executing the computer program, implements the method described above.

According to a fifth aspect, the present disclosure provides a computer program product. The computer program product includes a computer program/instructions. The computer program/instructions, when executed by a processor, cause the method described above to be implemented.

### BRIEF DESCRIPTION OF THE DRAWINGS

The accompanying drawings herein, which are incorporated into and form a part of the description, illustrate the embodiments in line with the present disclosure and are used in conjunction with the description to explain the principles of the present disclosure.

In order to more clearly illustrate the technical solutions in the embodiments of the present disclosure or in the prior art, the accompanying drawings for describing the embodiments or the prior art will be briefly described below. Apparently, those of ordinary skill in the art may still derive other drawings from these accompanying drawings without creative efforts.
FIG. 1 is a flowchart of a video processing method according to embodiments of the present disclosure;
FIG. 2 is a schematic diagram of a first playback mode interface according to embodiments of the present disclosure;
FIG. 3 is a schematic diagram of another first playback mode interface according to embodiments of the present disclosure;
FIG. 4 is a schematic diagram of a further first playback mode interface according to embodiments of the present disclosure;
FIG. 5 is a schematic diagram of another second playback mode interface according to embodiments of the present disclosure;
FIG. 6 is a schematic diagram of a further second playback mode interface according to embodiments of the present disclosure;
FIG. 7 is a schematic diagram of another second playback mode interface according to embodiments of the present disclosure;
FIG. 8 is a schematic diagram of a further second playback mode interface according to embodiments of the present disclosure;
FIG. 9 is a schematic structural diagram of a video processing apparatus according to embodiments of the present disclosure; and
FIG. 10 is a schematic structural diagram of a video processing device according to embodiments of the present disclosure.

### DETAILED DESCRIPTION OF EMBODIMENTS

For a clearer understanding of the above objectives, features and advantages of the present disclosure, the solutions of the present disclosure will be further described below. It should be noted that the embodiments of the present disclosure and features in the embodiments may be combined with each other without conflict.

Many specific details are set forth in the following description to facilitate a full understanding of the present disclosure. However, the present disclosure may also be implemented in other ways different from those described herein. Apparently, the embodiments in the description are only some rather than all of the embodiments of the present disclosure.

With the continuous development of short video technology, people's interaction requirements related to video playback have become more and more diversified. Therefore, the problem of how to enrich interactive functions related to video playback to meet users' diversified interaction requirements and improve users' video playback experience is attracting more attention of those skilled in the art.

To this end, the embodiments of the present disclosure provide a video processing method. First, in response to a mode switch operation acting on a first playback mode interface of a first video, a second playback mode interface of the first video is displayed, where at least one interactive function control determined based on the first video is displayed in a preset function area on the second playback mode interface; and in response to a trigger operation on a first interactive function control among the at least one interactive function control, a preset interactive function panel is displayed on the second playback mode interface, and first interactive information corresponding to the first interactive function control is displayed on the preset interactive function panel. In the embodiments of the present disclosure, switching between different playback mode interfaces for a video is enabled, and the interactive function control determined based on the video is displayed on the second playback mode interface after mode switching, enabling the user to trigger, on the second playback mode interface, the display of the interactive information determined based on the video. It can be seen that in the embodiments of the present disclosure, interactive functions related to video playback are enriched, thereby meeting the user's diversified interactive requirements and improving the user's video playback experience.

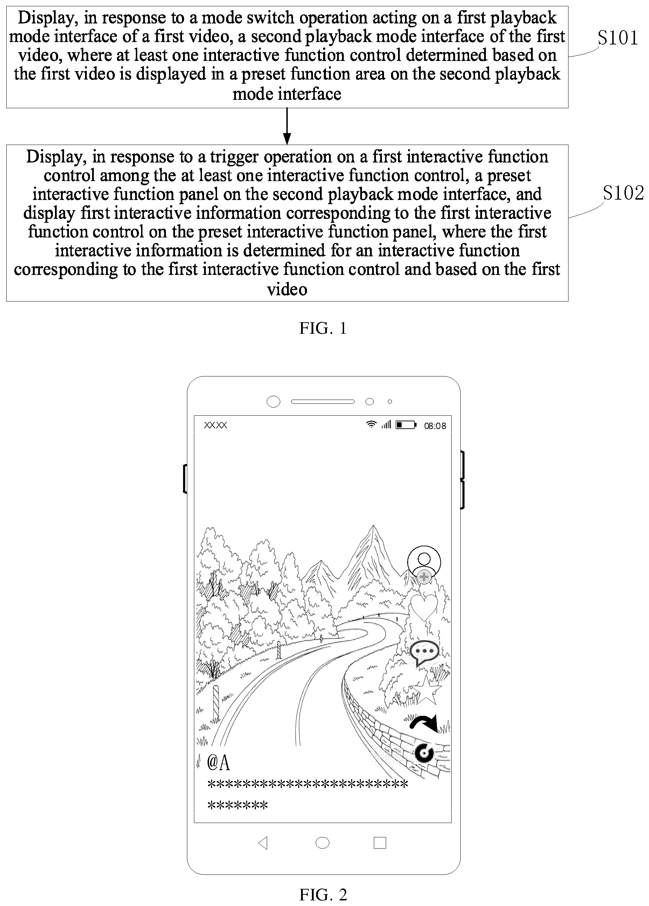

Based on this, embodiments of the present disclosure provide a video processing method. FIG. 1 is a flowchart of a video processing method according to embodiments of the present disclosure. The method specifically includes the following steps.

S101: in response to a mode switch operation acting on a first playback mode interface of a first video, a second playback mode interface of the first video is displayed,
where at least one interactive function control determined based on the first video is displayed in a preset function area on the second playback mode interface.

The video processing method according to these embodiments of the present disclosure may be applied to a client. For example, the client may include a client deployed in a smartphone, a client deployed in a tablet computer, etc.

In these embodiments of the present disclosure, the first video may be any video, specifically, may be of various types of videos classified by video duration, such as a short video, a long video, or a medium-length video, where different video types classified by video duration respectively correspond to different video duration ranges, and a video whose duration falls within a corresponding video duration range belongs to a video type corresponding to the video duration range. For example, videos with long durations, such as movies and TV series, generally belong to the long video type.

In optional implementations, the second playback mode interface belongs to a clear-screen playback mode interface, that is, a video playback interface on which some or all function controls are hidden based on the first playback mode interface. The first playback mode interface is different from the second playback mode interface, and the first playback mode interface may be a default playback mode interface. FIG. 2 is a schematic diagram of a first playback mode interface according to embodiments of the present disclosure.

In these embodiments of the present disclosure, in a process of playing the first video based on the first playback mode interface, when the mode switch operation acting on the first playback mode interface of the first video is received, the second playback mode interface of the first video is displayed, and the interactive function control is displayed in the preset function area on the second playback mode interface, where the preset function area may be any area preset on the second playback mode interface. This is not limited in these embodiments of the present disclosure.

The mode switch operation may include a preset interactive operation, such as a single-tap operation, a double-tap operation, or a swipe operation, acting on the first playback mode interface, to trigger switching from the first playback mode interface to the second playback mode interface. The mode switch operation may also include a tap operation, a swipe operation, etc. triggered for a mode switching control provided on the first playback mode interface. The switching from the first playback mode interface to the second playback mode interface is achieved by triggering an interactive operation on the mode switching control, where a display position of the mode switching control may be set based on specific needs. This is not limited in these embodiments of the present disclosure.

In these embodiments of the present disclosure, the second playback mode interface is provided with the preset function area, and the at least one interactive function control is displayed in the preset function area, where the interactive function control is determined based on the first video.

In optional implementations, an interactive function control displayed in the preset function area may be determined based on a media resource genre to which the first video belongs, where the media resource genre may include different video types classified by video duration, such as a short video, a long video, or a medium-length video. For example, videos of different types may correspond to different interactive function controls displayed in the preset function area on the second playback mode interface. Specifically, the interactive function control may include a collection control, a music-related control, a related-recommended-video control, a chapter content display control, an episode selection control, etc.

In addition, the media resource genre may also include an image-text genre, an article genre, and so on.

It should be noted that there may be a plurality of interactive function controls in the preset function area on the second playback mode interface, and a display order of the interactive function controls in the preset function area may be determined based on a preset display priority of the interactive function controls.

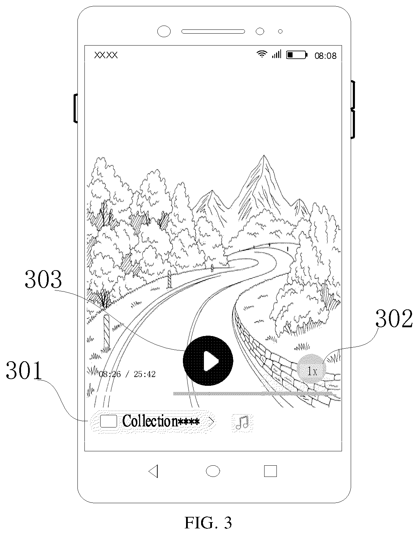

FIG. 3 is a schematic diagram of a second playback mode interface according to embodiments of the present disclosure. The first video is played on the second playback mode interface. Assuming that the first video belongs to a video collection, a first interactive function control, namely, a collection control 301, may be displayed in the preset function area on the second playback mode interface.

S102: in response to a trigger operation on a first interactive function control among the at least one interactive function control, a preset interactive function panel is displayed on the second playback mode interface, and first interactive information corresponding to the first interactive function control is displayed on the preset interactive function panel,
where the first interactive information is determined for an interactive function corresponding to the first interactive function control and based on the first video.

In these embodiments of the present disclosure, an interactive function control has corresponding interactive information, and the interactive information is determined for an interactive function corresponding to the interactive function control and based on the first video. For example, if the interactive function control is the collection control, the interactive information corresponding to the interactive function control is information about a video collection to which the first video belongs.

Different interactive function controls are used to trigger display of different interactive information. Assuming that the first interactive function control is the chapter content display control, the first interactive information corresponding to the first interactive function control is chapter content information included in the first video. It should be noted that interactive information corresponding to the interactive function control displayed in the preset function area on the second playback mode interface is related to a video being currently played on the second playback mode interface, that is, the information is determined based on a feature or content of the video.

In these embodiments of the present disclosure, when a trigger operation on the first interactive function control in the preset function area on the second playback mode interface is received, the preset interactive function panel is first displayed on the second playback mode interface, and the first interactive information corresponding to the first interactive function control is displayed on the preset interactive function panel. A display size of the preset interactive function panel may be set based on specific needs, for example, may be a half-screen panel, a three-quarter screen panel, etc.

In optional implementations, when the trigger operation on the first interactive function control in the preset function area on the second playback mode interface is received, the preset interactive function panel is pulled up from the bottom of the second playback mode interface, and the first interactive information corresponding to the first interactive function control is obtained and displayed on the preset interactive function panel. Obtaining the first interactive information corresponding to the first interactive function control may specifically be obtaining the first interactive information corresponding to the first interactive function control from a server.

In practical applications, in order to reduce the impact on video viewing experience of a user based on the second playback mode interface, when display of the preset interactive function panel is triggered, the video being currently played on the second playback mode interface may be switched from full screen playback to a reduced-size-window mode, so that the user can watch the full playback of the first video while browsing the interactive information displayed on the preset interactive function panel, thereby improving the user's viewing experience.

In optional implementations, when the trigger operation on the first interactive function control in the preset function area on the second playback mode interface is received, the first video is played in a preset reduced-size-window mode on the second playback mode interface, and the preset interactive function panel is displayed, and the first interactive information corresponding to the first interactive function control is displayed on the preset interactive function panel.

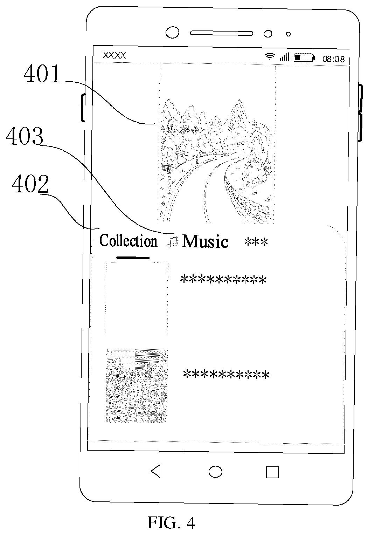

FIG. 4 is a schematic diagram of another second playback mode interface according to embodiments of the present disclosure. When a trigger operation on the collection control 301 on the second playback mode interface shown in FIG. 3 is received, the first video is played in a reduced-size-window mode on the second playback mode interface, as shown in 401. At the same time, a preset interactive function panel 402 is displayed on the second playback mode interface, and the first interactive information corresponding to the first interactive function control is displayed on the preset interactive function panel 402.

According to the video processing method provided in the embodiments of the present disclosure, first, in response to the mode switch operation acting on the first playback mode interface of the first video, the second playback mode interface of the first video is displayed, where the at least one interactive function control determined based on the first video is displayed in the preset function area on the second playback mode interface; and in response to the trigger operation on the first interactive function control among the at least one interactive function control, the preset interactive function panel is displayed on the second playback mode interface, and the first interactive information corresponding to the first interactive function control is displayed on the preset interactive function panel. In the embodiments of the present disclosure, switching between different playback mode interfaces for a video is enabled, and the interactive function control determined based on the video is displayed on the second playback mode interface after mode switching, enabling the user to trigger, on the second playback mode interface, the display of the interactive information determined based on the video. It can be seen that in the embodiments of the present disclosure, interactive functions related to video playback are enriched, thereby meeting the user's diversified interactive requirements and improving the user's video playback experience.

In practical applications, in order to enrich relevant interactive functions of the second playback mode interface to meet the user's diversified requirements related to video playback, in the embodiments of the present disclosure, the second playback mode interface may be used to carry more interactive information related to the first video, so that the user can trigger richer interactive functions related to the first video based on the second playback mode interface.

Specifically, the preset interactive function panel may be used to carry more interactive information related to the first video, which is not specifically limited to the interactive information corresponding to the interactive function control displayed in the preset function area on the second playback mode interface.

In optional implementations, when the trigger operation on the first interactive function control in the preset function area on the second playback mode interface is received, the preset interactive function panel is displayed on the second playback mode interface, and the first interactive information corresponding to the first interactive function control is displayed by fault on the preset interactive function panel. In addition, the preset interactive function panel is provided with the second interactive function control determined based on the first video, where the second interactive function control may belong to the interactive function control displayed in the preset function area on the second playback mode interface, or may not be displayed in the preset function area.

When a trigger operation on the second interactive function control acting on the preset interactive function panel is received, display of the default-displayed first interactive information corresponding to the first interactive function control is switched, on the preset interactive function panel, to display of second interactive information corresponding to the second interactive function control,
where the second interactive information corresponding to the second interactive function control is related to the first video, and is determined for an interactive function corresponding to the second interactive function control and based on the first video. The second interactive function control is used to trigger display of second interactive information, and the second interactive information specifically includes information related to the first video. Specifically, the second interactive function control may be a function control determined based on the first video, for example a function control related to a media resource genre, video content, a video feature, and other information of the first video. Assuming that the second interactive function control is the related-recommended-video control, the second interactive information may be a related recommended video corresponding to the first video; and assuming that the second interactive function control is the related-music control, the second interactive information may include music carried in the first video (for example background music), a video generated based on the background music in the first video, etc.

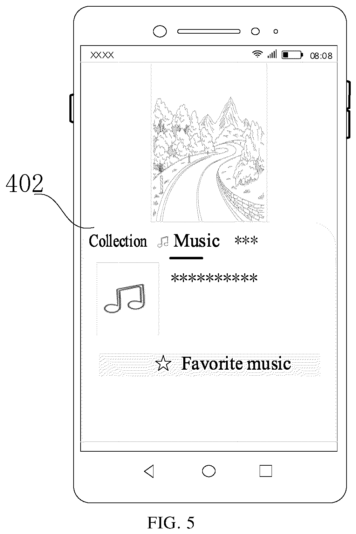

FIG. 5 is a schematic diagram of another second playback mode interface according to embodiments of the present disclosure. When a trigger operation on a second interactive function control 403 (assumed to be the related-music control) on the second playback mode interface shown in FIG. 4 is received, display of the first interactive information corresponding to the first interactive function control is switched, on the preset interactive function panel, to display of second interactive information corresponding to the second interactive function control 403. The second interactive information includes music included in the first video and videos generated based on the music, or the like, as shown in the second interactive function control 403 displayed on the preset interactive function panel 402 on the second playback mode interface in FIG. 5.

In addition, a plurality of interactive function controls determined based on the first video may be displayed on the preset interactive function panel. Based on the preset interactive function panel, switching display of interactive information corresponding to different interactive function controls may be triggered to enrich video-related interactive functions and improve user interactive experience.

In these embodiments of the present disclosure, while displaying the first interactive information corresponding to the first interactive function control on the preset interactive function panel, other interactive function controls related to the first video may also be displayed on the preset interactive function panel. Based on the preset interactive function panel, switching display of the interactive information related to the first video can be achieved, so that the user can trigger more interactive functions related to the first video based on the second playback mode interface (i.e., the clear-screen playback mode interface), thereby improving user experience.

In addition, in practical applications, the second playback mode interface may be further provided with a playback control component, and the playback control component is used to control playback of a video on the second playback mode interface. Specifically, the playback control component may include a play/pause component, a speed control component, a progress bar component, and the like, for example, a speed control component 302 and a play/pause component 303 displayed on the second playback mode interface shown in FIG. 3.

Specifically, when a trigger operation on the playback control component on the second playback mode interface is received, playback control is performed on the first video being currently played on the second playback mode interface. Specifically, when a trigger operation on a play/pause control on the second playback mode interface is received, the first video being currently played on the second playback mode interface is paused, or the first video being currently paused on the second playback mode interface is resumed.

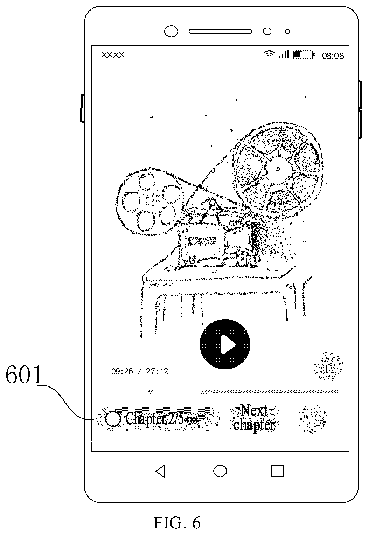

For ease of understanding, the video processing method of the embodiments of the present disclosure is described again by taking the first video having chapter content information as an example. Specifically, at least a chapter content display control may be displayed on the second playback mode interface of the first video. FIG. 6 is a schematic diagram of another second playback mode interface according to embodiments of the present disclosure. A chapter content display control 601 is displayed in the preset function area on the second playback mode interface.

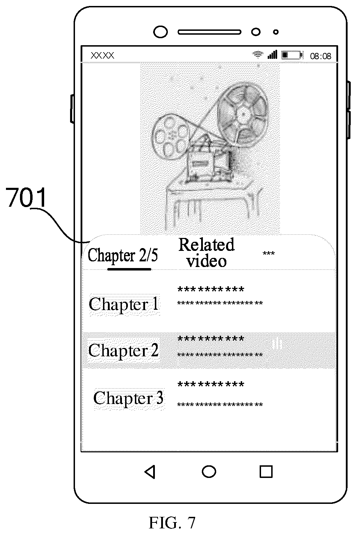

After a trigger operation on the chapter content display control 601 is received, the preset interactive function panel is displayed on the second playback mode interface, and interactive information corresponding to the chapter content display control 601 is displayed on the preset interactive function panel. The interactive information specifically includes chapter content information of the first video. FIG. 7 is a schematic diagram of another second playback mode interface according to embodiments of the present disclosure. A preset interactive function panel 701 is displayed on the second playback mode interface, and the chapter content information of the first video is displayed on the preset interactive function panel 701.

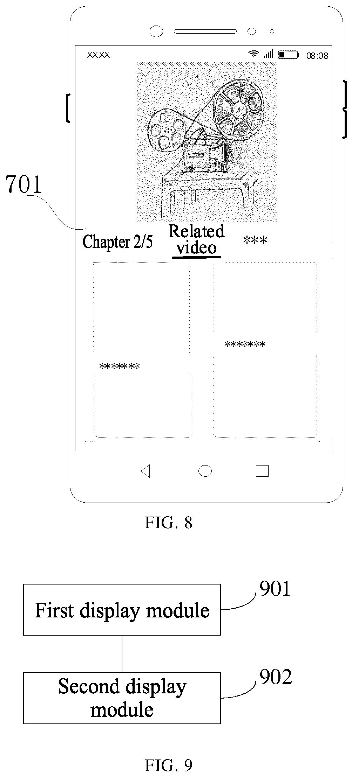

In response to a trigger operation on a related-video control on the preset interactive function panel 701, display of the chapter content information of the first video is switched, on the preset interactive function panel 701, to display of a related recommended video of the first video. FIG. 8 is a schematic diagram of another second playback mode interface according to embodiments of the present disclosure.

It should be noted that in these embodiments of the present disclosure, the types of interactive function controls respectively displayed in the preset function area on the second playback mode interface and displayed on the preset interactive function panel are not limited. For example, the interactive function control may include the chapter content display control, the related-video control, the collection control, etc. When a number of interactive function controls displayed on the preset interactive function panel is greater than a number of interactive function controls in the preset function area on the second playback mode interface, the interactive function controls displayed in the preset function area may be determined based on a display priority of the interactive function controls, where the display priority of the interactive function controls may be predetermined based on requirements.

In practical applications, in order to ensure the user's video playback experience, when the user triggers video switching, a switched video is played by default based on the first playback mode interface, so that the user can view relevant information of the video, such as the theme and publisher information of the video, through the video played on the first playback mode interface.

In optional implementations, when the second playback mode interface of the first video is displayed, in response to a video switch operation on the first video, the first video is switched to a second video, and a first playback mode interface of the second video is displayed. That is, in a process of playing the first video based on the second playback mode interface, if the video switch operation on the first video is received, during video switching, playback mode interface is also switched, that is, from the second playback mode interface to the first playback mode interface, and the second video is played on the first playback mode interface.

In these embodiments of the present disclosure, the video switch operation on the first video played on the second playback mode interface may include a video switch operation acting on the second playback mode interface, for example, a swipe operation, and may also include a video switch operation automatically triggered when the playback of the first video ends.

In these embodiments of the present disclosure, in a process of playing the first video on the second playback mode interface, a function of switching back from the second playback mode interface to the first playback mode interface is enabled, that is, switching from playing the first video based on the second playback mode interface to playing the first video based on the first playback mode interface.

In optional implementations, in response to a mode switch-back operation acting on the second playback mode interface of the first video, switching from playing the first video based on the second playback mode interface to playing the first video based on the first playback mode interface is performed.

Specifically, the mode switch-back operation may include a mode switch-back operation acting on the second playback mode interface, for example, a preset swipe operation, a tap operation, or other interactive operations. Alternatively, it may include switching from playing the first video based on the second playback mode interface to playing the first video based on the first playback mode interface, based on a duration of playing the first video based on the second playback mode interface reaching a preset duration, that is, when a duration of playing the first video based on the second playback mode interface reaches a preset duration. Alternatively, it may include switching from playing the first video based on the second playback mode interface to playing the first video based on the first playback mode interface when the first video is played once based on the second playback mode interface, that is, when the first video finishes playing once based on the second playback mode interface.

Based on the method embodiments, the present disclosure further provides a video processing apparatus. FIG. 9 is a schematic structural diagram of a video processing apparatus according to embodiments of the present disclosure. The apparatus includes:
a first display module 901 configured to display, in response to a mode switch operation acting on a first playback mode interface of a first video, a second playback mode interface of the first video, where at least one interactive function control determined based on the first video is displayed in a preset function area on the second playback mode interface; and
a second display module 902 configured to in response to a trigger operation on a first interactive function control among the at least one interactive function control, display a preset interactive function panel on the second playback mode interface, and display first interactive information corresponding to the first interactive function control on the preset interactive function panel, where the first interactive information is determined for an interactive function corresponding to the first interactive function control and based on the first video.

In optional implementations, the apparatus further includes:
a switching module configured to switch from the first video to a second video in response to a video switch operation on the first video, and display a first playback mode interface of the second video.

In optional implementations, the second display module is specifically configured to:
play, in response to the trigger operation on the first interactive function control among the at least one interactive function control, the first video in a preset reduced-size-window mode on the second playback mode interface, and display the preset interactive function panel.

In optional implementations, the preset interactive function panel is provided with a second interactive function control determined based on the first video, and the apparatus further includes:
a display switching module configured to switch, on the preset interactive function panel, from display of the first interactive information corresponding to the first interactive function control to display of second interactive information corresponding to the second interactive function control in response to a trigger operation on the second interactive function control acting on the preset interactive function panel, where the second interactive information is determined based on the first video.

In optional implementations, the second interactive function control is a related-recommended-video control, and the second interactive information corresponding to the second interactive function control includes a related recommended video of the first video.

In optional implementations, the second playback mode interface is provided with a playback control component, and the apparatus further includes:
a control module configured to perform, in response to a trigger operation on the playback control component, playback control on the first video being currently played on the second playback mode interface.

In optional implementations, the interactive function control is determined based on a media resource genre to which the first video belongs.

According to the video processing apparatus provided in the embodiments of the present disclosure, first, in response to the mode switch operation acting on the first playback mode interface of the first video, the second playback mode interface of the first video is displayed, where the at least one interactive function control determined based on the first video is displayed in the preset function area on the second playback mode interface; next, in response to the trigger operation on the first interactive function control among the at least one interactive function control, the preset interactive function panel is displayed on the second playback mode interface, and the first interactive information corresponding to the first interactive function control is displayed on the preset interactive function panel. In the embodiments of the present disclosure, switching between different playback mode interfaces for a video is enabled, and the interactive function control determined based on the video is displayed on the second playback mode interface after mode switching, enabling the user to trigger, on the second playback mode interface, the display of the interactive information determined based on the video. It can be seen that in the embodiments of the present disclosure, interactive functions related to video playback are enriched, thereby meeting the user's diversified interactive requirements and improving the user's video playback experience.

In addition to the method and apparatus described above, embodiments of the present disclosure further provide a computer-readable storage medium. The computer-readable storage medium has instructions stored therein. The instructions, when run on a terminal device, cause the terminal device to implement the video processing method described in the embodiments of the present disclosure.

Embodiments of the present disclosure further provide a computer program product. The computer program product includes a computer program or instructions. When the computer program or instructions, when executed by a processor, cause the video processing method described in the embodiments of the present disclosure to be implemented.

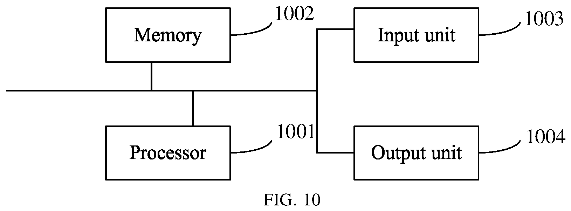

In addition, embodiments of the present disclosure further provide a video processing device. As shown in FIG. 10, the device may include:
a processor 1001, a memory 1002, an input unit 1003, and an output unit 1004. There may be one or more processors 1001 in the video processing device. For example, there is one processor in FIG. 10. In some embodiments of the present disclosure, the processor 1001, the memory 1002, the input unit 1003, and the output unit 1004 may be connected through a bus or in another manner, for example, are connected through the bus in FIG. 10.

The memory 1002 may be configured to store a software program and a module. The processor 1001 performs various functional applications of the video processing device and processes data by running the software program and the module stored in the memory 1002. The memory 1002 may mainly include a program storage area and a data storage area. The program storage area may store an operating system, an application required by at least one function, and the like. In addition, the memory 1002 may include a high-speed random-access memory, and may further include a non-volatile memory, such as at least one magnetic disk storage device, a flash memory device, or other volatile solid-state storage devices. The input unit 1003 may be configured to receive entered numerical or character information, and generate a signal input related to a user setting and function control of the video processing device.

Specifically, in these embodiments, the processor 1001 loads an executable file corresponding to a process of one or more applications into the memory 1002 in accordance with the following instructions, and the processor 1001 runs the application stored in the memory 1002, to implement various functions of the above video processing device.

It should be noted that the relational terms such as "first" and "second" herein are only used to distinguish one entity or operation from another, and do not necessarily require or imply that any actual relationship or sequence exists between these entities or operations. Moreover, the terms "include", "including", "comprise" and "comprising", or any of their variants are intended to cover a non-exclusive inclusion, so that a process, method, article, or device that includes a list of elements not only includes those elements but also includes other elements that are not expressly listed, or further includes elements inherent to such process, method, article, or device. In the absence of more restrictions, an element defined by "including/comprising a/an ..." does not exclude another identical element in a process, method, article, or device that includes the element.

The above description illustrates merely specific implementations of the present disclosure, so that those skilled in the art can understand or implement the present disclosure. Various modifications to these embodiments are apparent to those skilled in the art, and the general principle defined herein may be practiced in other embodiments without departing from the spirit or scope of the present disclosure. Therefore, the present disclosure will not be limited to the embodiments described herein, but extends to the widest scope that complies with the principles and novelty disclosed in this specification.

## Claims

1. A video processing method, comprising:
displaying, in response to a mode switch operation acting on a first playback mode interface of a first video, a second playback mode interface of the first video, wherein at least one interactive function control determined based on the first video is displayed in a preset function area on the second playback mode interface; and
in response to a trigger operation on a first interactive function control among the at least one interactive function control, displaying a preset interactive function panel on the second playback mode interface, and displaying first interactive information corresponding to the first interactive function control on the preset interactive function panel, wherein the first interactive information is determined for an interactive function corresponding to the first interactive function control and based on the first video.

2. The method according to claim 1, wherein after displaying, in response to the mode switch operation acting on the first playback mode interface of the first video, the second playback mode interface of the first video, the method further comprises:
switching from the first video to a second video in response to a video switch operation on the first video, and displaying a first playback mode interface of the second video.

3. The method according to claim 1, wherein displaying, in response to the trigger operation on the first interactive function control among the at least one interactive function control, the preset interactive function panel on the second playback mode interface comprises:
playing, in response to the trigger operation on the first interactive function control among the at least one interactive function control, the first video in a preset reduced-size-window mode on the second playback mode interface, and displaying the preset interactive function panel.

4. The method according to claim 1, wherein the preset interactive function panel is provided with a second interactive function control determined based on the first video, and after displaying the first interactive information corresponding to the first interactive function control on the preset interactive function panel, the method further comprises:
switching, on the preset interactive function panel, from display of the first interactive information corresponding to the first interactive function control to display of second interactive information corresponding to the second interactive function control in response to a trigger operation on the second interactive function control acting on the preset interactive function panel, wherein the second interactive information is determined for an interactive function corresponding to the second interactive function control and based on the first video.

5. The method according to claim 4, wherein the second interactive function control is a related-recommended-video control, and the second interactive information corresponding to the second interactive function control comprises a related recommended video of the first video.

6. The method according to claim 1, wherein the second playback mode interface is provided with a playback control component, and after displaying, in response to the mode switch operation acting on the first playback mode interface of the first video, the second playback mode interface of the first video, the method further comprises:
performing, in response to a trigger operation on the playback control component, playback control on the first video being currently played on the second playback mode interface.

7. The method according to claim 1, wherein the interactive function control is determined based on a media resource genre to which the first video belongs.

8. A video processing apparatus, comprising:
a first display module configured to display, in response to a mode switch operation acting on a first playback mode interface of a first video, a second playback mode interface of the first video, wherein at least one interactive function control determined based on the first video is displayed in a preset function area on the second playback mode interface; and
a second display module configured to in response to a trigger operation on a first interactive function control among the at least one interactive function control, display a preset interactive function panel on the second playback mode interface, and display first interactive information corresponding to the first interactive function control for the preset interactive function panel, wherein the first interactive information is determined for an interactive function corresponding to the first interactive function control and based on the first video.

9. A computer-readable storage medium having instructions stored therein, wherein the instructions, when run on a terminal device, cause the terminal device to implement the method according to any of claims 1 to 7.

10. A video processing device, comprising: a memory, a processor, and a computer program that is stored on the memory and executable on the processor, wherein the processor, when executing the computer program, implements the method according to any of claims 1 to 7.
